# EUROPÄISCHE PATENTANMELDUNG

(11) **EP 1 050 762 A1**
(43) Veröffentlichungstag der Anmeldung: **08.11.2000**
(21) Anmeldenummer: 00102540.2
(22) Anmeldetag: 07.02.2000
(51) Int. Cl.: G01S 17/66, G01S 7/497, H04B 10/105

(54) **Verfahren und Vorrichtung zum Kalibrieren der Ab-Lage eines Empfangsstrahls in einem Terminal von seiner Soll-Lage sowie Verwendung der Vorrichtung**

(30) Priorität: 05.05.1999 CH 84799
(71) Anmelder: Contraves Space AG, 8052 Zürich (CH)
(72) Erfinder: Neubert, Jakob, Dr., 8050 Zuerich (CH); Adolph, Peter A., 4054 Basel (CH); Baister, Guy, 8404 Winterthur (CH)
(74) Vertreter: Hotz, Klaus, Dipl.-El.-Ing./ETH

(57) **Zusammenfassung**

**Verfahren** zum Kalibrieren der Ab-Lage eines Empfangsstrahls in einem Terminal von seiner Soll-Lage. Der Empfangsstrahl gelangt auf einen Empfangssensor und ein Aquisitionsstrahl gelangt auf einen Aquisitionssensor des Terminals. Der Erfassungsbereich des Aquisitionssensors ist grösser als derjenige des Empfangssensors. Ein Anteil eines vom Terminal an das Partnerterminal emittierten Sendestrahls wird als Einfallsstrahl auf eine Reflexionsfläche geführt, wo er in einen Ausfallstrahl reflektiert wird. Je ein Anteil des Ausfallstrahls wird auf den Aquisitionssensor und auf den Empfangssensor geführt wird. Mindestens annähernd zeitgleich wird je Messung für den Aquisitionssensor und den Empfangssensor durchgeführt; die Mess-Ergebnisse werden verglichen, um die Ab-Lage des Empfangsstrahls von seiner Soll-Lage zu ermitteln.
**Vorrichtung** zum Kalibrieren der Ab-Lage eines Empfangsstrahls in einem Terminal von seiner Soll-Lage. Das Terminal umfasst mindestens einen Empfangskanal mit je einem Empfangssensor, einen Sendekanal und einen Aquisitionskanal mit einem Aquisitionssensor. Im Sendekanal ist eine optische Trenneinheit angeordnet, welche den Aquisitionsstrahl vom Sendestrahl und vom Empfangsstrahl trennt. Eine Reflexionsfläche reflektiert den einen Einfallsstrahl bildenden Anteil des Sendestrahls in einen Ausfallstrahl. Optische Mittel bringen den Ausfallstrahl auf den Empfangssensor. Eine Mess- und Vergleichseinrichtung dient dazu, mindestens annähernd um zeitgleich eine Messung für den Empfangssensor und den Aquisitionssensor durchzuführen und die Ergebnisse der Messungen zu vergleichen, um daraus die Ab-Lage des Empfangsstrahls von seiner Soll-Lage festzustellen.
**Verwendung** einer bevorzugten Weiterbildung der Vorrichtung in einem mit einer Vorhalte-Einrichtung ausgerüsteten Terminal, welches mit einem relativ zu ihm verschieblichen Partnerterminal kommuniziert. Das hierbei entstehende Strahlentripel wird zur Kalibrierung und zur Korrektur der Einstellung der Vorhalte-Einrichtung benutzt.

## Beschreibung

Die Erfindung betrifft ein Verfahren nach dem Oberbegriff des Anspruchs **1**, eine Vorrichtung nach dem Oberbegriff des Anspruchs **3** und eine Verwendung der im Anspruch **8** definierten Vorrichtung nach dem Oberbegriff des Anspruchs **10**.

Die Kommunikation zwischen Weltraumterminals kann mittels optischer Datenübertragung durchgeführt werden. Die verschiedenen optischen Einheiten, welche dazu erforderlich sind, sind dazu in einer optischen Bank und einer Teleskopeinrichtung angeordnet. Um eine einwandfreie Datenübertragung zu erhalten, müssen die optischen Achsen der in der optischen Bank angeordneten Einheiten vorbestimmte bzw. invariante relative Soll-Lagen, im allgemeinen in paralleler Ausrichtung, einnehmen und gegenseitige Verkippungen dieser Achsen ausgeschlossen sein. Verkippungen manifestieren sich insbesondere darin, dass der Empfangsstrahl nicht auf seine Soll-Lage trifft sondern eine Ab-Lage von dieser Soll-Lage aufweist. Gründe für solche zu vermeidende Verkippungen der Achsen der optischen Einheiten sind beispielsweise Wärme- und Strahlungseinflüsse sowie Alterungs- bzw. Abnützungsprozesse innerhalb der optischen Bank. Um die Verkippungen zu vermeiden oder zu minimieren, werden herkömmlicherweise verschiedene Massnahmen getroffen; insbesondere wird die optische Bankstruktur möglichst starr ausgebildet, um deren Verbiegung zu verhindern, und die einzelnen optischen Einheiten werden nur über einen geringen Bereich ihrer Länge an der optischen Bank fixiert, während sie über ihre restliche Länge frei sind. Eine optische Bank dieser Art ist beispielsweise aus der ***EP-0 844 473-A1*** bekannt.

Es hat sich nun aber gezeigt, dass es trotz der getroffenen Massnahmen nicht in jedem Fall möglich ist, die auftretenden Verkippungen der optischen Achsen der optischen Einheiten in der erforderlichen Weise innerhalb der sehr geringen Toleranzen zu halten. Es ist ausserdem zu erwarten, dass in Zukunft einerseits die thermischen Belastungen zunehmen, was zu einer verstärkten Verkippung der optischen Achsen führt, und anderseits die Anforderungen an die Genauigkeit der präzisen gegenseitigen Ausrichtung der optischen Achsen steigen.

Bei der Datenübertragung zwischen dem erwähnten Terminal und einem ebenfalls im Weltraum befindlichen Partnerterminal tritt eine zusätzliches Problem auf; im allgemeinen bewegen sich das Terminal und das Partnerterminal relativ zueinander. Der Sendestrahl muss deshalb das Terminal nicht mit Richtung auf die momentan vom Partnerterminal eingenommene Stelle verlassen sondern zur Berücksichtigung der Relativbewegung um einen Vorhaltewinkel von dieser Richtung abweichen. Um dies zu erreichen, enthält ein Terminal herkömmlicherweise eine Vorhaltevorrichtung und einen Vorhaltesensor (Point Ahead Sensor) PAS, also eine verhältnismässig aufwendige Einrichtung.

Es ist Aufgabe der vorliegenden Erfindung, ein Verfahren und eine Einrichtung zu dessen Durchführung zu schaffen, welches trotz der zu erwartenden üblicherweise auftretenden Verkippungen der optischen Achsen verschiedener optischer Einheiten einer optischen Bank eine optimale Aquisition des Partnerterminals sowie eine einwandfreie Datenübertragung erlaubt. Im weiteren ist es Aufgabe der Erfindung, eine Verwendung einer bevorzugten Weiterbildung der erfindungsgemässen Vorrichtung vorzuschlagen.

Diese Aufgabe wird erfindungsgemäss gelöst
für das eingangs genannte Verfahren durch die Merkmale des kennzeichnenden Teils des Anspruchs **1**;
für die eingangs genannte Vorrichtung durch die Merkmale des kennzeichnenden Teils des Anspruchs **3**; und
für die eingangs genannte Verwendung durch die Merkmale des kennzeichnenden Teils des Anspruchs **10**.

Vorteilhafte Weiterbildungen des erfindungsgemässen Verfahrens und der erfindungsgemässen Einrichtung sind durch die abhängigen Ansprüche **2** bzw. **4** bis **9** definiert.

Im Gegensatz zum herkömmlichen Vorgehen, bei welchem man eine gegenseitige Verkippung der optischen Achsen der einzelnen optischen Einheiten weitestgehend zu vermeiden trachtete, werden neu nach dem Prinzip der Erfindung solche Verkippungen in Kauf genommen. Um die Aquisition und die Datenübertragung dennoch mit einwandfreien Ergebnissen durchführen zu können, ist es aber notwendig, diese gegenseitigen Verkippungen bzw. die Abweichungen der optischen Achsen zweier optischen Einheiten von ihrer relativen Soll-Lage zu erfassen bzw. zu kalibrieren, indem die Ab-Lage des Empfangsstrahls von seiner Soll-Lage bestimmt wird. Dadurch kann der Einfluss der Verkippungen auf die Datenübertragung berücksichtigt werden. Zur Grobausrichtung des Terminals auf ein Partnerterminal dient ein Aquisitionskanal mit einem Aquisitionssensor, dessen Erfassungsbereich wesentlich grösser ist als der Erfassungsbereich des Empfangskanals. Die Ab-Lage des Empfangsstrahls von seiner Soll-Lage bedeutet, dass sich bei einer fiktiven Projektion eines Bildes des Empfangssensors in ein zeitgleiches Bild des Aquisitionssensors der Empfangsstrahl nicht an der beabsichtigten Stelle, beispielsweise mittig, im Bild des Aquisitionssensors befinden würde. Unter der erwähnten Kalibrierung wird die Ermittlung der Ab-Lage des Empfangsstrahls verstanden. Zur Kalibrierung wird eine Reflektoreinheit angeordnet. Ein geringer Anteil des Sendestrahls fällt als Einfallsstrahl auf eine Reflexionsfläche der Reflektoreinheit und wird dort zu einem Ausfallstrahl reflektiert, welch letzterer in den Aquisitionskanal und in den Empfangskanal gelangt. Es erfolgt eine zeitgleiche Messung in den Erfassungsbereichen des Aquisitionssensors und des Empfangssensors. Das Messergebnis gibt Aufschluss über die Ab-Lage des Empfangsstrahls von seiner Soll-Lage bzw. vermittelt die notwendigen Daten für die erwähnte Kalibrierung. Diese Einrichtung ist einfach, preisgünstig und leicht, und sie liefert präzise Ergebnisse, und zwar unabhängig davon, ob die Ab-Lage von einer Verkippung der optischen Achse des Sende- oder des Empfangskanals verursacht wird. Vorteilhaft ist auch, dass sich durch die Reflexion in der Reflektoreinheit mindestens derjenige Anteil der Ab-Lage, der durch Verkippungen der optischen Achse des Sendekanals verursacht wird, verdoppelt, so dass daraus ein deutliches Signal entsteht.

Mit Hilfe einer vorteilhaften Weiterbildung der erfindungsgemässen Einrichtung lässt sich der Einbau eines Vorhaltesensors in einfacher Weise vermeiden; allerdings muss dazu die Reflektoreinheit zwei weitere Reflexionsflächen aufweisen. An diesen zusätzlichen Reflexionsflächen wird der Einfallsstrahl zu zwei weiteren Ausfallstrahlen reflektiert. Die insgesamt drei Reflexionsflächen stehen schief zueinander, derart, dass sie keine gemeinsame Gerade besitzen und ihre Flächennormalen in unterschiedlichen Richtungen verlaufen. Diese drei Strahlen bilden ein Strahlentripel, welches zur Kalibrierung bzw. Korrektur der Einstellung der Vorhalte-Einrichtung benutzt werden kann. Dadurch erübrigt sich die Anordnung eines zusätzlichen Kanals für die Vorhalte-Einrichtung.

Weitere Eigenschaften und Vorteile der Erfindung werden im folgenden anhand eines bevorzugten Ausführungsbeispieles und mit Bezug auf die Zeichnung erläutert. Es zeigen:
- **Fig. 1A**: ein Ausführungsbeispiel einer Vorrichtung nach der Erfindung, in vereinfachter Darstellung;
- **Fig. 1B**: ein Blockdiagramm zur Veranschaulichung des erfindungsgemässen Verfahrens;
- **Fig. 2**: eine Reflektoreinheit mit einer Reflexionsfläche;
- **Fig. 3**: eine Refiektoreinheit mit drei Reflexionsflächen;
- **Fig. 4A**: den Empfangsbereich des Aquisitionssensors mit dem Bild des Ausfallstrahls in dessen Soll-Lage;
- **Fig. 4B**: den Empfangsbereich des Aquisitionssensors mit dem Bild des Ausfallstrahls ausserhalb der Soll-Lage;
- **Fig. 5A**: den Empfangsbereich des Aquisitionssensors, mit einem Kalibrierpunkt;
- **Fig. 5B**: den Empfangsbereich des Aquisitionssensors, mit dem Bild eines einfallenden Strahlentripels; und
- **Fig. 5C bis 5E**: den Empfangsbereich des Aquisitionekanals mit dem Bild des zu Kalibrierzwecken verschobenen Strahlentripels in drei verschiedenen Kalibrier-Lagen.

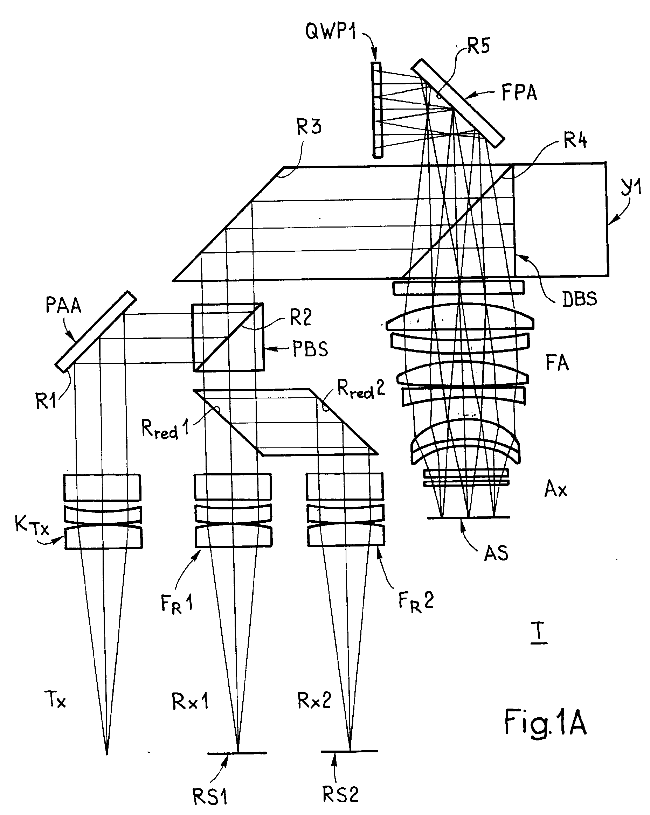

In der folgenden Beschreibung beziehen sich Angaben wie 'oben', 'unten', 'rechts', 'links' stets auf die Anordnung in **Fig. 1A**.

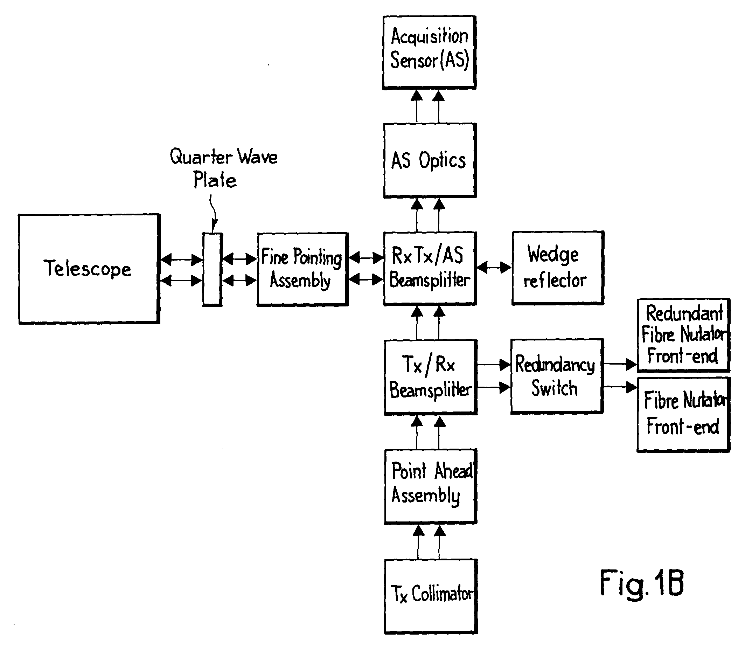

Die in **Fig. 1A** dargestellte Vorrichtung nach der Erfindung dient zur Durchführung des erfindungsgemässen Verfahrens. Das Blockdiagramm gemäss **Fig. 1B** zeigt die Erfindung in schematisierter Darstellung. **Fig. 1A** und **Fig. 1B** zeigen jeweils die für die vorliegende Erfindung relevanten Bestandteile eines Terminals **T**, wobei aus **Fig. 1** auch der entsprechende Strahlenverlauf ersichtlich ist.

Das Terminal **T** enthält drei Kanäle, nämlich einen Sendekanal **T**_{**x**}, einen Empfangskanal **R**_{**x**}**1** mit einem als Redundanz angeordneten Zweig **R**_{**x**}**2**, jeweils mit einem Empfangssensor **RS1** bzw. **RS2**, sowie einen Aquisitionskanal **A**_{**x**} mit einem Aquisitionssensor **AS**.

Gemäss **Fig. 1A** sind im Sendekanal **T**_{**x**}, in Strahlrichtung gesehen, eine Kollimatorvorrichtung **K**_{**Tx**}, eine erste Reflexionsfläche **R1**, eine zweite Reflexionsfläche **R2**, eine dritte Reflexionsfläche **R3**, eine vierte Reflexionsfläche **R4**, eine fünfte Reflexionsfläche **R5** und eine Viertelwellenplatte (Quarter Wave Plate) **QWP1** angeordnet. Die erste Reflexionsfläche **R1** ist, wie weiter unten ausführlich beschrieben, Bestandteil einer Vorhalte-Vorrichtung (Point Ahead Assembly) **PAA**. Die zweite Reflexionsfläche **R2** ist Bestandteil eines polarisierenden Strahlteilers (Polarizing Beam Splitter) **PBS**, welcher so ausgebildet ist, dass er für Strahlen mit der Polarisation des Sendestrahls reflektierend und für Strahlen mit der Polarisation des Empfangsstrahls möglichst brechungsfrei durchlässig ist. Die vierte Reflexionsfläche **R4** wird durch einen dichroitischen Strahlteiler (Dichroitic Beam Splitter) **DBS** gebildet. Die fünfte Reflexionsfläche **R5** wird durch eine Feinziel-Vorrichtung (Fine Pointing Assembly) **FPA** gebildet. Die Viertelwellenplatte **QWP1** verwandelt das bis anhin linear polarisierte Licht des Sendekanals für die Übertragung im Weltraum zum Partnerterminal in zirkular polarisiertes Licht.

Der Empfanyskanal **R**_{**x**}**1** umfasst, ebenfalls in Strahlrichtung gesehen, die Vierteiwellenplatte **QWP1**, die fünfte Reflexionsfläche R5, den dichroitischen Teiler **DBS**, die dritte Reflexionsfläche **R3**, den reflektierende Strahlteiler **PBS**, eine Fokussiereinrichtung **F**_{**R**}**1** und einen Empfangssensor **RS1**. Zwischen dem reflektierenden Strahlteiler **PBS** und einem weiteren Empfangssensor **RS2** ist als Redundanz ein zusätzlicher Zweig des Empfangskanals angeordnet, wozu zwei weitere Reflexionsflächen **R**_{**red**}**1** und **R**_{**red**}**2** und eine weitere Fokussiereinrichtung **F**_{**R**}**2** vorgesehen sind. Die Viertelwellenplatte **QWP1** verwandelt das durch den Weltraum ankommende zirkular polarisierte Licht des Partnerterminals in linear polarisiertes Licht.

Der reflektierende Strahlteiler **PBS** hat die Differenzierung von Sende- und Empfangsstrahl zum Zweck. Er wird beim vorliegenden Ausführungsbeispiel bzw. in Fällen benötigt, in welchen sich Sende- und Empfangsstrahl durch unterschiedliche Polarisation unterscheiden. In anderen Ausführungsbeispielen, in welchen sich Sende- und Empfangsstrahl beispielsweise durch unterschiedliche Wellenlängen unterscheiden, würde anstelle des **PBS** ein **DBS** verwendet.

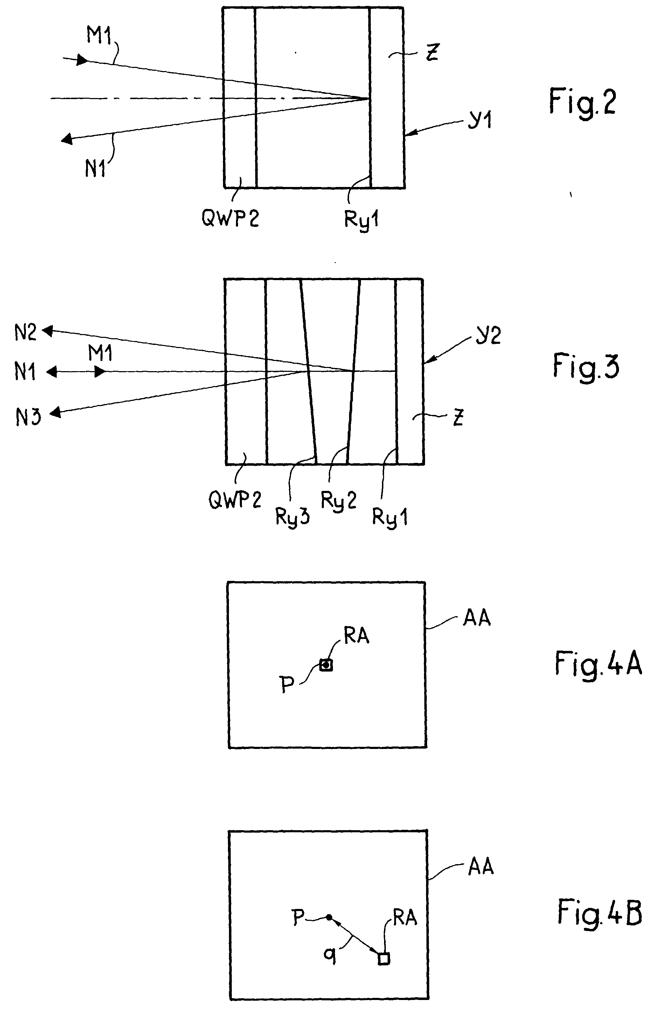

Der Sendekanal dient zum Übertragen von Daten an das Partnerterminal und der Empfangskanal dient zum Empfangen von Daten vom Partnerterminal, jeweils in einem Betriebsmodus, in welchem die beiden Terminals schon grob aufeinander ausgerichtet sind. Zur Grobausrichtung dient eine Grobausricht-Vorrichtung (Coarse Pointing Assembly); diese umfasst einerseits eine am Partnerterminal angeordnete Lichtbake zum Emittieren eines Bakenlichtes und anderseits den Aquisitionskanal am Terminal zum Empfangen des Bakenlichtes. Der Aquisitionskanal **Ax** trennt sich beim dichroitischen Teiler **DBS** vom Empfangskanal **Rx** und weist eine Fokussiereinrichtung **F**_{**A**} sowie den Aquisitionssensor **AS** auf. Der Erfassungsbereich **AA** des Aquisitionssensors **AS** ist bedeutend grösser als der Erfassungsbereich **RA** des Empfangssensors **RS**, wie dies schematisch aus den **Fig. 4A**, **4B** ersichtlich ist.

Zur Erfassung bzw. Kalibrierung der gegenseitigen Verkippung der optischen Achsen des Sendekanais **T**_{**x**} und des Empfangskanals **R**_{**x**} dient erfindungsgemäss eine Reflektoreinheit **Y1**, welche in **Fig. 2** dargestellt ist. Diese weist eine Reflexionsfläche **R**_{**y**}**1** und einen in Strahleinfallsrichtung hinter der Reflexionsfläche **R**_{**y**}**1** angeordneten Absorber **Z** auf. Als Einfallsstrahl **M1**, der auf die Reflexionsfläche **R**_{**y**}**1** trifft, wird ein kleiner Anteil des Sendestrahls, nämlich hier das im dichroitischen Teiler **DBS** entstehende Lecklicht des Sendestrahls, benutzt. Dies hat den Vorteil, dass sich ein zusätzlicher Energieaufwand entfällt. Der Einfallsstrahl **M1** wird an der Reflexionsfläche **R**_{**y**}**1** der Reflektoreinheit **Y1** in einen Ausfallstrahl **N1** reflektiert, wobei der Rest des ankommenden Lecklichtes durch den Absorber **Z** absorbiert wird. Der reflektierte Strahl **N1** durchläuft anschliessend den Empfangskanal und wird durch den Empfangssensor **RS** erfasst. Es ist offensichtlich, dass der Strahl **N1** beim Auftreffen auf den Empfangssensor **RS** gleich konfiguriert sein muss wie der Empfangsstrahl, und dass daher Mittel vorzusehen sind, um die Konfiguration des Einfallsstrahls **M1** entsprechend in die erforderliche Konfiguration des Ausfallstrahls **N1** zu transformieren.

**Fig. 4A** stellt einen Fall dar, in welchem keine gegenseitige Verkippung der optischen Achsen des Sendekanals und des Empfangskanals vorhanden ist, so dass sich der Bereich des Empfangssensors **RS** an seiner Soll-Lage **P** innerhalb des Erfassungsbereichs des Aquisitionssensors **AS** befindet In **Fig. 4B** ist ein Fall dargestellt, in welchem eine gegenseitige Verkippung der optischen Achsen des Sendekanals und des Empfangskanals vorhanden ist, was zu einer Ab-Lage von **q** des Erfassungsbereichs **RA** des Empfangssensors **RS** von seiner Soll-Lage **P** innerhalb des Erfassungsbereichs **AA** des Aquisitionssensors **AS** führt. Das qualitative und quantitative Ausmass dieser Ab-Lage **q** wird erfindungsgemäss zur Kalibrierung der gegenseitigen Verkippung der optischen Achsen verwertet. Die **Fig. 4A, 4B** dienen lediglich zur Darstellungen des Prinzips; in Wirklichkeit erfolgt die Feststellung der Lage des Erfassungsbereichs **RA** des Empfangssensors **RS** innerhalb des Erfassungsbereichs des Aquisitionssensors **AS** nicht wie in den **Fig. 4A, 4B** dargestellt durch direkten Vergleich innerhalb eines Bildes sondern durch getrennte aber zeitgleiche oder in geringem Zeitintervall erfolgende Ausmessung der beiden Erfassungsbereiche **AA, RA**.

Beim vorliegenden Ausführungsbeispiel weist die Reflektoreinheit **Y1** im weiteren eine Viertelwellenplatte **QWP2** auf. Hierbei handelt es sich um ein Mittel, um den Ausfallstrahl **N1** gleich zu konfigurieren wie den Empfangsstrahl. Die Viertelwellenplatte **QWP2** wird vom einfallenden Strahl **M1** und vom ausfallenden Strahl **N1** durchlaufen und bewirkt eine Drehung der Polarisation dieser Strahlen, derart, dass der ausfallende Strahl **N1** die gleiche Polarisation aufweist wie der Empfangsstrahl; dies ist erforderlich, damit der reflektierte Strahl **N1** beim polarisierenden Strahlteiler **PBS** den Weg des Empfangsstrahls nimmt. Die Viertelwellenplatte **QWP2** erübrigt sich bei Ausführungsbeispielen, in welchen sich Eingangsstrahl und Ausgangsstrahl nicht durch verschiedene Polarisation sondern beispielsweise durch verschiedenen Wellenlängen unterscheiden.

Wie schon erwähnt, weist das Terminal **T** im ferner die Vorhalte-Einrichtung **PAA** auf, um bei der Richtung des Sendestrahls der relativen Verschiebung zwischen dem sendenden Terminal und dem nicht dargestellten empfangende Partnerterminal während des Übermittlungs-Zeitintervalls Rechnung zu tragen. Die Einstellung und Kalibrierung der Sensorvorrichtung der Vorhalte-Einrichtung **PAA** kann mittels einer Reflektoreinheit **Y2** erfolgen, welche in **Fig. 3** dargestellt ist. Die Reflektoreinheit **Y2** unterschiedet sich von der Reflektoreinheit **Y1** dadurch, dass sie zusätzlich zur Reflexionsfläche **R**_{**y**}**1** zwei weitere Reflexionsflächen **R**_{**y**}**2** und **R**_{**y**}**3** aufweist. Die drei Reflexionsflächen **R**_{**y**}**1**, **R**_{**y**}**2**, **R**_{**y**}**3** sind schief zueinander angeordnet, derart, dass sie keine gemeinsame Gerade enthalten und ihre Flächennormalen nicht zusammenfallen. Eine solche Anordnung ist unter der Bezeichnung Keilreflektor an sich bekannt. Die Anordnung kann so sein, dass die drei Reflexionsflächen **R**_{**y**}**1**, **R**_{**y**}**2**, **R**_{**y**}**3** der Reflektoreinheit **Y2** gegenseitig gleichmässig oder ungleichmässig angeordnet sind.

**Fig. 3** zeigt auch, wie durch die Reflexionseinrichtung **Y2** aus dem einfallenden Strahl **M1** nicht nur ein einzelner ausfallender Strahl sondern ein Strahlentripel **N1, N2, N3** erzeugt wird, das sich in drei verschiedenen Richtungen ausbreitet.

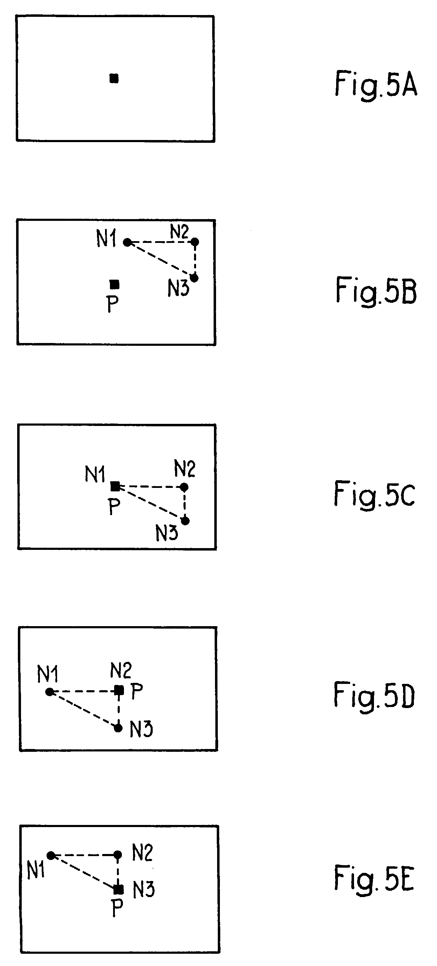

**Fig. 5A** zeigt den Erfassungsbereich **AA** des Aquisitionssensors **AS**, mit einer Kalibrier-Lage **P**_{**K**}, deren Bedeutung im folgenden beschrieben wird. **Fig. 5B** zeigt den Erfassungsbereich **AA** des Aquisitionssensors **AS** mit dem Bild des Strahlentripels aus den Strahlen **N1, N2, N3**, so, wie es auftrifft. Durch Verschiebung jeweils eines Strahles **N1** oder **N2** oder **N3** in die Kalibrier-Lage **P**_{**K**}, wie dies in **Fig. 5C** bzw. **Fig. 5D** bzw. **Fig. 5E** dargestellt ist, gewinnt man die Grundlage für die Korrektur der Vorhalte-Einstellung. Die jeweilige Konfiguration dieses Strahlentripels aus den Strahlen **N1, N2, N3** kann also zur Kalibrierung des Kippwinkels der Vorhalte-Einrichtung **PAA** benutzt werden.

## Patentansprüche

1. Verfahren zum Kalibrieren der Ab-Lage (**q**) eines Empfangsstrahls in einem Terminal (**T**) von seiner Soll-Lage (**P**),
- wobei der von einem Partnerterminal emittierte Empfangsstrahl auf einen Empfangssensor (**RS**) gelangt, und
- wobei ein vom Partnerterminal emittierter Aquisitionsstrahl auf einen Aquisitionssensor. (**AS**) des Terminals (**T**) gelangt,
- dessen Erfassungsbereich (**AA**) grösser ist als der Erfassungabereich (**RA**) des Empfangssensors (**RS**),
**dadurch gekennzeichnet,**
- dass ein Anteil eines vom Terminal (**T**) an das Partnerterminal emittierten Sendestrahls als Einfallsstrahl (**M1**) auf eine Reflexionsfläche (**R**_{**y**}) geführt wird,
- dass der Einfallsstrahl (**M1**) an der Reflexionsfläche (**R**_{**y**}) in einen Ausfallstrahl (**N1**) reflektiert wird,
- dass je ein Anteil des Ausfallstrahls (**N1**) auf den Aquisitionssensor (**AS**) und auf den Empfangssensor (**RS**) geführt wird, und
- dass ein mindestens annähernd zeitgleich je eine Messung für den Aquisitionssensor (**AS**) und den Empfangssensor (**RS**) durchgeführt wird, und die Ergebnisse dieser Messungen verglichen werden, um die Ab-Lage (**q**) des Empfangsstrahls von seiner Soll-Lage (**P**) zu ermitteln.

2. Verfahren nach Anspruch **1,**
**dadurch gekennzeichnet,**
dass der Einfallsstrahl (**M1**) an zwei weiteren Reflexionsflächen (**R**_{**y**}**2**, **R**_{**y**}**3**) in zwei weitere Ausfallstrahlen (**N2, N3**) reflektiert wird, welche zusammen mit dem erstgenannten Ausfallstrahl (**N1**) ein die drei Strahlen (**N1, N2, N3**) umfassendes Strahlentripel mit nicht in einer Ebene liegenden Ausbreitungsrichtungen der drei Strahlen (**N1, N2, N3**) bilden.

3. Vorrichtung zum Kalibrieren der Ab-Lage (**q**) eines Empfangsstrahls in einem Terminal (**T**) von seiner Soll-Lage (**P**), welches Terminal (**T**)
- mindestens einen Empfangskanal (**R**_{**x**}**1, R**_{**x**}**2**) mit je einem Empfangssensor (**RS1, RS2**) zum Empfangen eines von einem Partnerterminal emittierten Empfangsstrahls,
- einen Sendekanal (**T**_{**x**}) zum Emittieren eines Sendestrahls an das Partnerterminal und
- einen Aquisitionskanal (**A**_{**x**}) mit einem Aquisitionssensor (**SA**) zum Empfangen eines vom Partnerterminal emittierten Aquisitionsstrahls aufweist, wobei
- der Erfassungsbereich (**AA**) des Aquisitionssensors (**AS**) grösser ist als der Erfassungsbereich (**RA**) des Empfangssensors (**RS**),
**dadurch gekennzeichnet**
- dass im Sendekanal eine optische Trenneinheit (**DBS**) angeordnet ist, welche den Aquisitionsstrahl vom Sendestrahl und vom Empfangsstrahl trennt,
- dass eine Reflexionsfläche (**R**_{**y**}**1**) vorhanden ist, um einen Einfallsstrahl (**M1**), der durch einen Teil des Sendestrahls gebildet ist, in einen Ausfallstrahl (**N1**) zu reflektieren,
- dass optische Mittel (**QWP2, R**_{**y**}**1, R**_{**y**}**2**) angeordnet sind, um den Ausfallstrahl (**N1**) auf den Empfangssensor (**RS1, RS2**) zu bringen, und
- dass eine Mess- und Vergleichseinrichtung angeordnet ist, um mindestens annähernd zeitgleich eine Messung für den Empfangssensor (**RS**) und den Aquisitionssensor (**AS**) durchzuführen und die Ergebnisse der Messungen zu vergleichen, um daraus die Ab-Lage (**q**) des Empfangsstrahls von seiner Soll-Lage (**P**) festzustellen.

4. Vorrichtung nach Anspruch **3**,
**dadurch gekennzeichnet,**
dass die Reflexionsfläche (**R**_{**y**}**1**) Bestandteil einer Reflektoreinheit (**Y1**) ist, weiche einen in Richtung des Einfallsstrahls (**M1**) der Reflexionsfläche nachgeschalteten Absorber (**Z**) aufweist.

5. Vorrichtung nach mindestens einem der Ansprüche **3** bis **4,**
**dadurch gekennzeichnet,**
dass die optischen Mittel eine Viertelwellenplatte (**QWP2**) umfassen, welche einen Bestandteil der Reflektoreinheit (**Y1**) bildet, und welche in Richtung des Eintrittsstrahls (**M1**) der Reflexionsfläche (**R**_{**y**}**1**) vorgeschaltet ist, damit die lineare Polarisationen des Einfallsstrahls (**M1**) auf die lineare Polarisation des Ausfallstrahls (**N1**) umpolarisierbar ist.

6. Vorrichtung nach mindestens einem der Ansprüche **3** bis **5,**
**dadurch gekennzeichnet,**
dass die optischen Mittel einen in einem zusammenfallenden Bereich des Sende- und des Empfangskanals angeordneten polarisierenden Strahlteiler (**PBS**) umfassen, welcher für den Sendestrahl reflektierend und für den Empfangsstrahl durchlässig ist.

7. Vorrichtung nach mindestens einem der Ansprüche **3** bis **6,**
**dadurch gekennzeichnet,**
dass die optische Trenneinheit (**DBS**) ein dichroitischer Teiler in einem zusammenfallenden Bereich des Empfangs-, Sende- und Aquisitionskanal ist, wobei das beim Durchgang des Sendestrahls durch den dichroitischen Teiler entstehende Lecklicht des Sendestrahls den Einfallsstrahl (**M1**) bildet.

8. Vorrichtung nach mindestens einem der Ansprüche **3** bis **7**,
**dadurch gekennzeichnet,**
dass die Reflektoreinheit (**Y2**) zwei weitere Reflexionsflächen (**R**_{**y**}**2**, **R**_{**y**}**3**) aufweist, an welchen der Einfallsstrahl (**M1**) zu zwei weiteren Ausfallstrahlen (**N2, N3**) reflektiert wird, wobei die drei Reflexionsflächen (**R**_{**y**}**1**, **R**_{**y**}**2**, **R**_{**y**}**3**) schief zueinander angeordnet sind, derart, sie keine gemeinsame Gerade aufweisen und ihre Flächennormalen in unterschiedlichen Richtungen verlaufen, damit die Ausfallstrahlen (**N1, N2, N3**) ein Strahlentripel mit drei verschiedenen Ausbreitungsrichtungen bilden.

9. Vorrichtung nach Anspruch **8,**
**dadurch gekennzeichnet,**
dass die drei Reflexionsflächen (**R**_{**y**}**1**, **R**_{**y**}**2**, **R**_{**y**}**3)** in regelmässiger oder unregelmässiger gegenseitiger Lage angeordnet sind.

10. Verwendung des durch die Vorrichtung gemäss Anspruch **8** oder **9** erzeugten Strahlentripels mit den Strahlen (**N1, N2, N3**) in einem mit einer Vorhalte-Einrichtung (**PAA**), ausgerüsteten Terminal (**T**), welches mit einem relativ zu ihm verschieblichen Partnerterminal kommuniziert,
**dadurch gekennzeichnet,**
dass das Strahlentripel zur Kalibrierung und zur Korrektur der Einstellung der Vorhalte-Einrichtung (**PAA**) benutzt wird.
